(19) Europäisches Patentamt
European Patent Office
Office européen des brevets

(11) **EP 1 783 442 A1**

(12) **EUROPEAN PATENT APPLICATION**
published in accordance with Art. 158(3) EPC

(43) Date of publication:
**09.05.2007 Bulletin 2007/19**

(51) Int Cl.:
**F25B 1/00** (2006.01)   **F24F 11/02** (2006.01)

(21) Application number: **05766325.4**

(22) Date of filing: **19.07.2005**

(86) International application number:
**PCT/JP2005/013248**

(87) International publication number:
**WO 2006/009141 (26.01.2006 Gazette 2006/04)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.07.2004 JP 2004209326**
**19.07.2005 JP 2005208078**

(71) Applicant: **DAIKIN INDUSTRIES, LTD.**
**Osaka-shi, Osaka 530-8323 (JP)**

(72) Inventors:
• **NAKAI, Akinori,**
**DAIKIN INDUSTRIES, LTD.**
**Kusatsu-shi,**
**Shiga 5258526 (JP)**
• **YANO, Yukimasa,**
**DAIKIN INDUSTRIES, LTD.**
**Kusatsu-shi,**
**Shiga 5258526 (JP)**
• **YAMAGUCHI, Nobuyuki,**
**DAIKIN INDUSTRIES, LTD.**
**Kusatsu-shi,**
**Shiga 5258526 (JP)**

(74) Representative: **HOFFMANN EITLE**
**Patent- und Rechtsanwälte**
**Arabellastrasse 4**
**81925 München (DE)**

(54) **AIR-CONDITIONING APPARATUS**

(57) To enable an air conditioner where an outdoor unit and an indoor unit are interconnected via communication pipes to perform pump down operation while reliably protecting a compressor. An air conditioner (1) is provided with an outdoor unit (2) including a gas close valve (27), a compressor (21) driven by a compressor motor (28) controlled by an inverter (31), an outdoor heat exchanger (23), an electrically powered expansion valve (24), and a liquid close valve (26); an indoor unit (4) including an indoor heat exchanger (41); and communication pipes (5, 6) that interconnect the outdoor unit (2) and the indoor unit (4). The air conditioner (1) determines, on the basis of compressor power supplied to the compressor motor (28) from the inverter (31), whether or not pump down operation is being performed in a state of refrigeration cycle operation that causes the indoor heat exchanger (41) to function as an evaporator of refrigerant, and when pump down operation is being performed, the air conditioner (1) stops the compressor (21) after a predetermined stop time has elapsed.

Fig. 3

START

S1 COOLING AND COMPRESSOR OPERATING? No
↓ Yes
S2 CALCULATE COMPRESSOR POWER
↓
S3 COMPRESSOR VOLTAGE < DETERMINATION POWER? Yes
↓ No
S4 CLEAR TIMER
S5 IS TIMER IN MIDDLE OF COUNTING? Yes
↓ No
S6 START TIMER
S7 CALCULATE STOP TIME
S8 ELAPSED BEYOND STOP TIME? Yes
↓ No
S11 IS THERE CHANGE IN OUTDOOR AIR TEMPERATURE FREQUENCY? Yes
↓ No
S9 PROTECTIVELY STOP COMPRESSOR
S10 INFORM WITH LED
END

EP 1 783 442 A1

## Description

### TECHNICAL FIELD

The present invention relates to an air conditioner, and in particular to an air conditioner where an outdoor unit and an indoor unit are interconnected via communication pipes.

### BACKGROUND ART

Conventionally, there has been a so-called separate-type air conditioner where an outdoor unit including a gas close valve, a compressor, an outdoor heat exchanger, an expansion valve, and a liquid close valve and an indoor unit including an indoor heat exchanger are interconnected via communication pipes. This air conditioner sometimes performs pump down operation to collect, inside the outdoor unit, refrigerant filling a refrigerant circuit when repair or replacement of the indoor unit or the outdoor unit is performed.

As this pump down operation, there is an operating method where, in a state where the air conditioner has closed the liquid close valve of the outdoor unit, for example, the air conditioner performs refrigeration cycle operation such as cooling operation that causes the indoor heat exchanger to function as an evaporator of the refrigerant, and after the air conditioner has detected that the intake pressure of the compressor has become equal to or less than a predetermined value or the discharge temperature has become equal to or greater than a predetermined value, the air conditioner closes the gas close valve and stops the compressor so that the refrigerant inside the refrigerant circuit is collected inside the outdoor unit (e.g., see Patent Document 1).

Further, as another pump down operation, there is an operating method where, in a state where the air conditioner has closed the liquid close valve of the outdoor unit, the air conditioner performs refrigeration cycle operation such as cooling operation that causes the indoor heat exchanger to function as an evaporator of the refrigerant, and after a predetermined stop time has elapsed from a point in time when the air conditioner has detected that the intake pressure of the compressor has become equal to or less than a predetermined value, the air conditioner stops the compressor so that the refrigerant inside the refrigerant circuit is collected inside the outdoor unit (e.g., see Patent Documents 2 and 3).

<Patent Document 1>
JP-A No. 2003-161535
<Patent Document 2>
JP-A No. 2000-161798
<Patent Document 3>
JP-A No. 2000-161799

### DISCLOSURE OF THE INVENTION

However, in the above-described conventional pump down operating methods, the stop period of the compressor is determined on the basis of changes in the state value of the refrigerant flowing inside the refrigerant circuit such as the intake pressure of the compressor and the discharge temperature, so there are cases where the air conditioner cannot accurately grasp the operating state of the compressor during pump down operation, and the air conditioner ends up continuing pump down operation over a long period of time. In such cases, because cooling and lubrication of the compressor are not sufficiently performed, there is the potential for damage to the motor and other configural parts of the compressor to occur, which is not preferable from the standpoint of protecting the compressor.

Further, when the air conditioner performs operation in a state where a close valve is closed due to poor construction or performs operation in a state where a refrigerant pipe is clogged or a state where various functional components such as an expansion valve, an electromagnetic valve, a filter, a close valve, and a four-way switch valve have failed, then similar to during pump down operation, there is the potential for damage to the motor and other configural parts of the compressor to occur.

It is a first object of the present invention to enable an air conditioner where an outdoor unit and an indoor unit are interconnected via communication pipes to perform pump down operation while reliably protecting the compressor.

Further, it is a second object of the present invention to enable an air conditioner to reliably protect the compressor even when poor construction or failure of various functional components or the like has occurred.

An air conditioner pertaining to a first invention comprises an outdoor unit, an indoor unit, and communication pipes that interconnect the outdoor unit and the indoor unit. The outdoor unit includes a gas close valve, a compressor driven by a motor controlled by an inverter, an outdoor heat exchanger, an expansion valve, and a liquid close valve. The indoor unit includes an indoor heat exchanger. The air conditioner determines, on the basis of compressor power supplied to the motor from the inverter, whether or not pump down operation is being performed in a state of refrigeration cycle operation that causes the indoor heat exchanger to function as an evaporator of refrigerant, and when pump down operation is being performed, the air conditioner stops the compressor after a predetermined stop time has elapsed.

During pump down operation, the compressor has the operating characteristic that the work of compressing the refrigerant becomes less and the consumed power becomes smaller. Thus, this air conditioner is configured to detect pump down operation by determining, on the basis of compressor power supplied to the motor from the inverter, whether or not pump down operation is being performed in a state of refrigeration cycle operation that causes the indoor heat exchanger to function as an evaporator of refrigerant. Because the air conditioner is configured to detect pump down operation on the basis of the operating characteristic of the compressor rather than changes in the state value of the refrigerant flowing inside the refrigerant circuit as has conventionally been the case, the air conditioner can perform pump down operation while reliably protecting the compressor. Moreover, because the air conditioner is configured to detect pump down operation using the compressor power of the compressor, it is difficult for the air conditioner to be affected by fluctuations in the voltage of a commercial power supply, and because the air conditioner uses the power value of the motor that drives the compressor from the inverter, the air conditioner is also not affected by the power consumed by electrical parts other than the motor that drives the compressor, which can also contribute to improvement of the detection precision of pump down operation. Examples of refrigeration cycle operation that causes the indoor heat exchanger to function as an evaporator of the refrigerant include cooling operation and dehumidifying operation.

An air conditioner pertaining to a second invention comprises the air conditioner pertaining to the first invention, wherein the air conditioner determines that pump down operation is being performed when the compressor power is less than a predetermined determination power value.

An air conditioner pertaining to a third invention comprises the air conditioner pertaining to the second invention, wherein the determination power value is calculated in consideration of operating frequency of the compressor.

In the compressor driven by the inverter-controlled motor, the load on the compressor tends to become larger when the compressor operates at a high operating frequency in comparison to when the compressor operates at a low operating frequency. Thus, this air conditioner is configured to use a function of the operating frequency as the determination power value for determining whether or not pump down operation is being performed, so that the air conditioner can sufficiently protect the compressor.

An air conditioner pertaining to a fourth invention comprises the air conditioner pertaining to the third invention, wherein the determination power value is calculated also further in consideration of outdoor air temperature.

The load on the compressor tends to become larger when the compressor operates under a condition where the outdoor air temperature is high in comparison to when the compressor operates under a condition where the outdoor air temperature is low. Thus, this air conditioner is configured to use a function of the outdoor air temperature as the determination power value for determining whether or not pump down operation is being performed, so that the air conditioner can more sufficiently protect the compressor.

An air conditioner pertaining to a fifth invention comprises the air conditioner pertaining to the first invention, wherein the air conditioner determines that pump down operation is being performed when a rate of change of a power value when the compressor power drops has become smaller than a predetermined determination rate of change.

An air conditioner pertaining to a sixth invention comprises the air conditioner pertaining to the first invention, wherein the air conditioner determines that pump down operation is being performed when an absolute value of a variation width of a power value when the compressor power drops has become larger than a predetermined determination variation width.

An air conditioner pertaining to a seventh invention comprises the air conditioner pertaining to any of the first to sixth inventions, wherein the stop time is calculated in consideration of the operating frequency of the compressor.

In the compressor driven by the inverter-controlled motor, the load on the compressor tends to become larger when the compressor operates at a high operating frequency in comparison to when the compressor operates at a low operating frequency. Thus, this air conditioner is configured to use a function of the operating frequency as the stop time that is the time from when the air conditioner detects pump down operation to until the air conditioner stops the compressor, so that the air conditioner can sufficiently protect the compressor .

An air conditioner pertaining to an eighth invention comprises the air conditioner pertaining to the seventh invention, wherein the stop time is calculated also further in consideration of outdoor air temperature.

The load on the compressor tends to become larger when the compressor operates under a condition where the outdoor air temperature is high in comparison to when the compressor operates under a condition where the outdoor air temperature is low. Thus, this air conditioner is configured to use a function of the outdoor air temperature as the stop time that is the time from when the air conditioner detects pump down operation to until the air conditioner stops the compressor, so that the air conditioner can more sufficiently protect the compressor.

An air conditioner pertaining to a ninth invention comprises a vapor compression-type refrigerant circuit including a compressor driven by a motor controlled by an inverter, a condenser, an expansion valve, and an evaporator. The air conditioner stops the compressor on the basis of compressor power supplied to the motor from the inverter during refrigeration cycle operation of the refrigerant circuit.

The compressor has an operating characteristic where, during pump down operation, the work of compressing the refrigerant becomes less and power consumption becomes smaller. Further, when the air conditioner performs operation in a state where a close valve is closed due to poor construction or performs operation in a state where a refrigerant pipe is clogged or in a state where various functional components such as an expansion valve, an electromagnetic valve, a filter, a close valve, or a four-way switch valve have failed, and when the place where that problem has occurred is the various functional components or the refrigerant pipe between the outlet of the condenser and the intake side of the compressor, an operating characteristic can be seen where, similar to pump down operation, the work of the compressor to compress the refrigerant becomes less and the consumed power becomes smaller in comparison to when the air conditioner is normally performing refrigeration cycle operation. Thus, this air conditioner is configured to perform, on the basis of the compressor power supplied to the motor from the inverter during refrigeration cycle operation of the refrigerant circuit, detection of pump down operation and failure detection such as when poor construction, clogging of a refrigerant pipe, or a state where various functional components have failed has occurred in the refrigerant pipe, the various functional components or the like between the outlet of the condenser and the intake side of the compressor. In this manner, because the air conditioner is configured to perform detection of pump down operation and failure detection on the basis of the operating characteristic of the compressor rather than changes in the state value of the refrigerant flowing inside the refrigerant circuit as has conventionally been the case, the air conditioner can reliably protect the compressor. Moreover, because the air conditioner is configured to perform detection of pump down operation and failure detection using the compressor power of the compressor, it is difficult for the air conditioner to be affected by fluctuations in the voltage of a commercial power supply, and because the air conditioner uses the power value of the motor that drives the compressor from the inverter, the air conditioner is also not affected by the power consumed by electrical parts other than the motor that drives the compressor, which can also contribute to improvement of the detection precision of pump down operation and of failure detection.

BRIEF DESCRIPTION OF THE DRAWINGS

FIG. 1 is a general configural diagram of a refrigerant circuit of an air conditioner pertaining to a first embodiment of the present invention.
FIG. 2 is a general electrical wiring diagram of an outdoor unit.
FIG. 3 is a flowchart showing operation during pump down operation.
FIG. 4 is a diagram showing temporal changes in compressor power during pump down operation.
FIG. 5 is a general configural diagram of a refrigerant circuit of an air conditioner pertaining to a second embodiment of the present invention.
FIG. 6 is a general electrical wiring diagram of an outdoor unit.
FIG. 7 is a flowchart showing operation to protectively stop a compressor during failure.
FIG. 8 is a diagram showing temporal changes in compressor power during failure.

DESCRIPTION OF THE REFERENCE NUMERALS

| 1, 101 | Air Conditioners |
| 2 | Outdoor Unit |
| 4 | Indoor Unit |
| 5 | Liquid Refrigerant Communication Pipe (Communication Pipe) |
| 6 | Gas Refrigerant Communication Pipe (Communication Pipe) |
| 10, 110 | Refrigerant Circuits |
| 21, 121 | Compressors |
| 23, 123 | Outdoor Heat Exchangers (Condensers, Evaporators) |
| 24, 124 | Electrically Powered Expansion Valves (Expansion Valves) |
| 26 | Liquid Close Valve |
| 27 | Gas Close Valve |
| 28, 128 | Compressor Motors (Motors) |
| 31, 131 | Inverters |
| 41, 141 | Indoor Heat Exchangers (Evaporators, Condensers) |

BEST MODE FOR CARRYING OUT THE INVENTION

Embodiments of an air conditioner pertaining to the present invention will be described below on the basis of the drawings.

(First Embodiment)

(1) Configuration of Air Conditioner

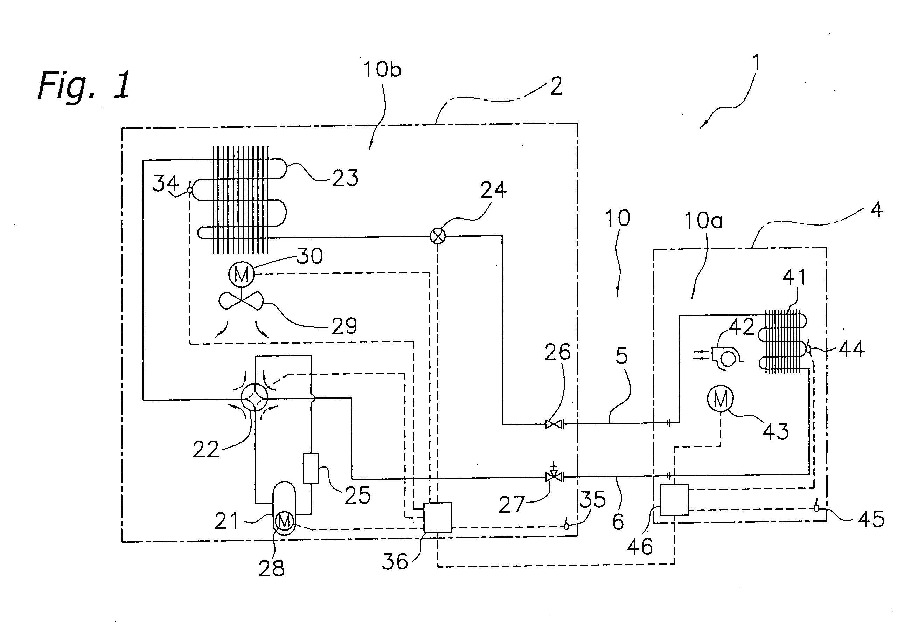

FIG. 1 is a general configural diagram of a refrigerant circuit of an air conditioner pertaining to a first embodiment of the present invention. An air conditioner 1 is a so-called separate-type air conditioner disposed with an outdoor unit 2, an indoor unit 4, and a liquid refrigerant communication pipe 5 and a gas refrigerant communication pipe 6 that interconnect the outdoor unit 2 and the indoor unit 4. A vapor compression-type refrigerant circuit 10 of the air conditioner 1 is configured by the interconnection of the outdoor unit 2, the indoor unit 4, the liquid refrigerant communication pipe 5 and the gas refrigerant communication pipe 6, and as will be described later, is capable of switching and operating between cooling operation and heating operation.

<Indoor Unit>

The indoor unit 4 is installed in the surface of a wall or the like inside a room. The indoor unit 4 is connected to the outdoor unit 2 via the refrigerant communication pipes 5 and 6 and configures part of the refrigerant circuit 10.
Next, the configuration of the indoor unit 4 will be described. The indoor unit 4 is mainly disposed with an indoor refrigerant circuit 10a that configures part of the refrigerant circuit 10. The indoor refrigerant circuit 10a is mainly disposed with an indoor heat exchanger 41. In the present embodiment, the indoor heat exchanger 41 is a cross fin-type fin-and-tube heat exchanger configured by a heat exchanger tube and numerous fins, and is a device for performing heat exchange between refrigerant and room air. In the present embodiment, the indoor unit 4 is disposed with an indoor fan 42 for taking room air into the unit, causing the room air to pass through the indoor heat exchanger 41, and thereafter supplying the air into the room as supply air, so that the indoor unit 4 is capable of causing heat to be exchanged between the room air and the refrigerant flowing through the indoor heat exchanger 41. The indoor fan 42 is driven to rotate by an indoor fan motor 43.
Further, an indoor heat exchange temperature sensor 44 that detects the temperature of the refrigerant flowing inside the indoor heat exchanger 41 and a room temperature sensor 45 that detects the room temperature and the like are disposed in the indoor unit 4. Further, the indoor unit 4 is disposed with an indoor controller 46 that controls the operation of each portion configuring the indoor unit 4. Additionally, the indoor controller 46 includes a microcomputer and a memory and the like disposed in order to control the indoor unit 4, and is configured such that it can exchange control signals and the like with a remote controller (not shown) and can exchange control signals and the like with the outdoor unit 2.

<Outdoor Unit>

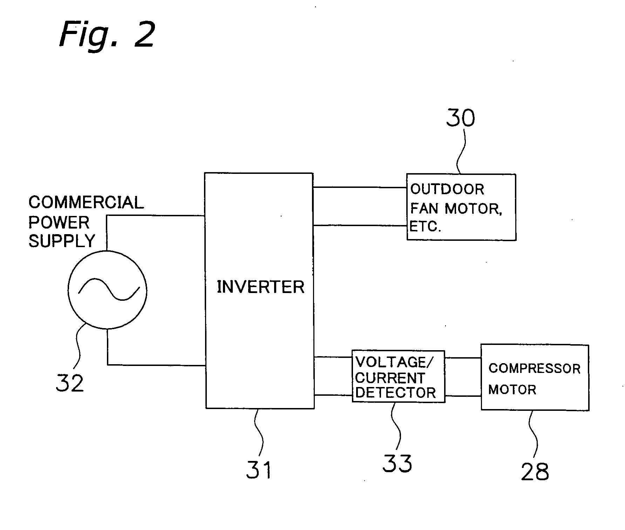

The outdoor unit 2 is installed outdoors. The outdoor unit 2 is connected to the indoor unit 4 via the refrigerant communication pipes 5 and 6 and configures part of the refrigerant circuit 10.
Next, the configuration of the outdoor unit 2 will be described. The outdoor unit 2 is mainly disposed with an outdoor refrigerant circuit 10b that configures part of the refrigerant circuit 10. The outdoor refrigerant circuit 10b is mainly disposed with a compressor 21, a four-way switch valve 22, an outdoor heat exchanger 23, an electrically powered expansion valve 24, an accumulator 25, a liquid close valve 26, and a gas close valve 27.
The compressor 21 is a compressor whose operational capacity can be varied, and is a positive displacement-type compressor driven by a compressor motor 28 controlled by an inverter 31 (see FIG. 2). The accumulator 25 is connected to an intake side of the compressor 21.
The four-way switch valve 22 is a valve for switching the direction of the flow of the refrigerant such that, during cooling operation, the four-way switch valve 22 is capable of connecting a discharge side of the compressor 21 and a gas side of the outdoor heat exchanger 23 and connecting the intake side of the compressor 21 (specifically, the accumulator 25) and the gas refrigerant communication pipe 6 (specifically, the gas close valve 27) (see the solid lines of the four-way switch valve 22 in FIG. 1; called "cooling operation switched state" below) to cause the outdoor heat exchanger 23 to function as a condenser of the refrigerant compressed in the compressor 21 and to cause the indoor heat exchanger 41 to function as an evaporator of the refrigerant condensed in the outdoor heat exchanger 23, and such that, during heating operation, the four-way switch valve 22 is capable of connecting the discharge side of the compressor 21 and the gas refrigerant communication pipe 6 (specifically, the gas close valve 27) and connecting the intake side of the compressor 21 and the gas side of the outdoor heat exchanger 23 (see the dotted lines of the four-way switch valve 22 in FIG. 1; called "heating operation switched state" below) to cause the indoor heat exchanger 41 to function as a condenser of the refrigerant compressed in the compressor 21 and to cause the outdoor heat exchanger 23 to function as an evaporator of the refrigerant condensed in the indoor heat exchanger 41.

In the present embodiment, the outdoor heat exchanger 23 is a cross-fin type fin-and-tube heat exchanger configured by a heat exchanger tube and numerous fins, and is a heat exchanger that functions as a condenser of the refrigerant during cooling operation and as an evaporator of the refrigerant during heating operation. The gas side of the outdoor heat exchanger 23 is connected to the four-way switch valve 22, and the liquid side of the outdoor heat exchanger 23 is connected to the liquid refrigerant communication pipe 5. In the present embodiment, the outdoor unit 2 is disposed with an outdoor fan 29 for taking outdoor air into the unit, causing the air to pass through the outdoor heat exchanger 23, and thereafter discharging the air to the outside of the unit, so that the outdoor unit 2 is capable of causing heat to be exchanged between the outdoor air and the refrigerant flowing through the outdoor heat exchanger 23. The outdoor fan 29 is driven by an outdoor fan motor 30.

The liquid close valve 26 and the gas close valve 27 are valves disposed at ports connected to external devices/pipes (specifically, the liquid refrigerant communication pipe 5 and the gas refrigerant communication pipe 6). The liquid close valve 26 is connected to the outdoor heat exchanger 23. The gas close valve 27 is connected to the four-way switch valve 22.

Further, an outdoor heat exchange temperature sensor 34 that detects the temperature of the refrigerant flowing inside the outdoor heat exchanger 23 and an outdoor air temperature sensor 35 that detects the outdoor air temperature and the like are disposed in the outdoor unit 2. Further, the outdoor unit 2 is disposed with an outdoor controller 36 that controls the operation of each portion configuring the outdoor unit 2. Additionally, the outdoor controller 36 includes a microcomputer and a memory disposed in order to control the outdoor unit 2 and the inverter 31 (see FIG. 2) that controls the compressor motor 28 and the like, and is configured such that it can exchange control signals and the like with the indoor controller 46 of the indoor unit 4. It will be noted that, as shown in the general electrical wiring diagram of the outdoor unit 2 shown in FIG 2, the inverter 31 is connected to a commercial power supply 32, converts alternating current to direct current, and can apply DC voltage to the outdoor fan motor 30 and the compressor motor 28. Additionally, a voltage/current detector 33 for detecting the compressor power supplied to the compressor motor 28 from the inverter 31 is disposed between the inverter 31 and the compressor motor 28. Further, the outdoor unit 2 is configured such that it can detect the number of revolutions of the compressor 21, that is, the operating frequency of the compressor 21.

As described above, the refrigerant circuit 10 of the air conditioner 1 capable of switching and operating between cooling operation and heating operation is configured by the interconnection of the indoor refrigerant circuit 10a, the outdoor refrigerant circuit 10b, and the refrigerant communication pipes 5 and 6.

(2) Operation of Air Conditioner

Next, the operation of the air conditioner 1 will be described.

<Cooling Operation>

First, cooling operation will be described using FIG. 1.

During cooling operation, the four-way switch valve 22 is in the state represented by the solid lines in FIG. 1, that is, a state where the discharge side of the compressor 21 is connected to the gas side of the outdoor heat exchanger 23 and where the intake side of the compressor 21 is connected to the gas close valve 27. Further, the liquid close valve 26, the gas close valve 27, and the electrically powered expansion valve 24 are open.

When the outdoor fan 29 of the outdoor unit 2, the compressor 21, and the indoor fan 42 of the indoor unit 4 are started in this state of the refrigerant circuit, gas refrigerant is taken into the compressor 21 and compressed, and is thereafter sent to the outdoor heat exchanger 23 via the four-way switch valve 22. Then, the refrigerant sent to the outdoor heat exchanger 23 heats the outdoor air and is condensed. Here, the outdoor air is taken into the outdoor unit 2 by the driving of the outdoor fan 29, heat exchange is performed with the refrigerant in the outdoor heat exchanger 23, and the outdoor air is discharged to the outside of the outdoor unit 2. Then, the liquid refrigerant condensed in the outdoor heat exchanger 23 is depressurized in the electrically powered expansion valve 24 and is thereafter sent to the indoor unit 4 via the liquid close valve 26 and the liquid refrigerant communication pipe 5. Then, the liquid refrigerant sent to the indoor unit 4 cools the room air and is evaporated in the indoor heat exchanger 41. Here, the room air is taken into the indoor unit 4 by the driving of the indoor fan 42, heat exchange is performed with the refrigerant in the indoor heat exchanger 41, and the room air is blown out into the room from the indoor unit 4. Then, the gas refrigerant evaporated in the indoor heat exchanger 41 is returned to the outdoor unit 2 via the gas refrigerant communication pipe 6. Then, the gas refrigerant returned to the outdoor unit 2 is again taken into the compressor 21 via the gas close valve 27, the four-way switch valve 22, and the accumulator 25. In this manner, cooling operation is performed.

<Heating Operation>

Next, heating operation will be described using FIG. 1.

During heating operation, the four-way switch valve 22 is in the heating operation switched state. Further, the liquid close valve 26, the gas close valve 27, and the electrically powered expansion valve 24 are open.

When the outdoor fan 29 of the outdoor unit 2, the compressor 21, and the indoor fan 42 of the indoor unit 4 are started in this state of the refrigerant circuit, gas refrigerant is taken into the compressor 21 and compressed, and is thereafter sent to the indoor unit 4 via the four-way switch valve 22, the gas close valve 27, and the gas refrigerant communication pipe 6. Then, the gas refrigerant sent to the indoor unit 4 heats the room air and is condensed in the indoor heat exchanger 41. Then, the liquid refrigerant condensed in the indoor heat exchanger 41 is sent to the outdoor unit 2 via the liquid refrigerant communication pipe 5. Then, the liquid refrigerant sent to the outdoor unit 2 is sent to the electrically powered expansion valve 24 via the liquid close valve 26, is depressurized, and cools the outdoor air and is evaporated in the outdoor heat exchanger 23. The gas refrigerant evaporated in the outdoor heat exchanger 23 is again taken into the compressor 21 via the four-way switch valve 22 and the accumulator 25. In this manner, heating operation is performed. It will be noted that, because the flows of the outdoor air and the room air are the same as during cooling operation, description thereof is omitted.

<Pump Down Operation>

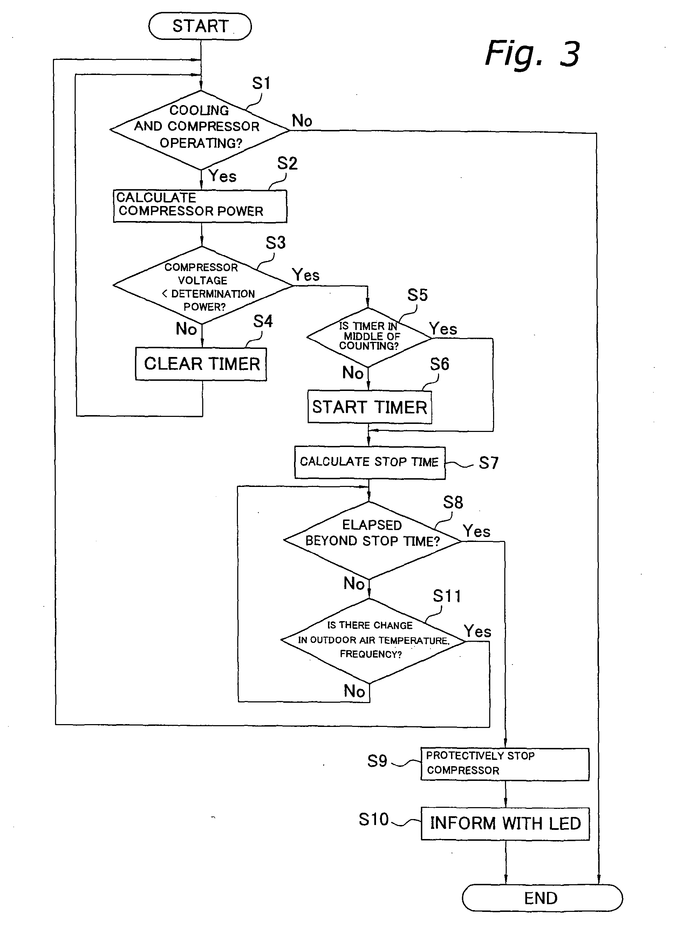

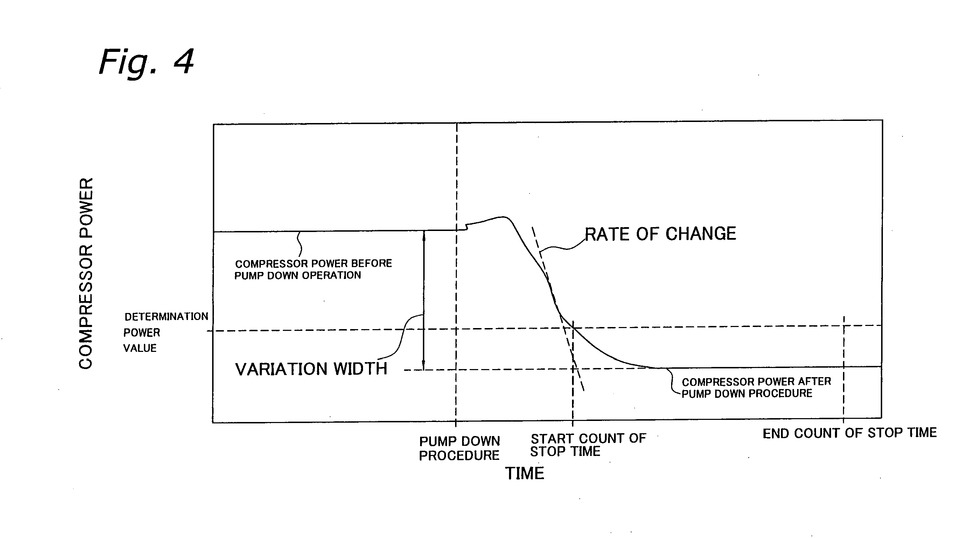

Next, pump down operation will be described using FIG. 1 to FIG. 4. Here, FIG. 3 is a flowchart showing operating during pump down operation, and FIG. 4 is a diagram showing temporal changes in compressor power during pump down operation.

Pump down operation is started by the air conditioner 1 performing a procedure to close the liquid close valve 26 (called "pump down procedure" below) when the air conditioner 1 is performing refrigeration cycle operation that causes the indoor heat exchanger 41 to function as an evaporator of the refrigerant, and pump down operation is ended by closing the gas close valve 27 and stopping the compressor 21 after the refrigerant filling the refrigerant circuit 10 has been collected inside the outdoor refrigerant circuit 10b (i.e., after the refrigerant inside the indoor refrigerant circuit 10a and the refrigerant communication pipes 5 and 6 has been collected inside the outdoor refrigerant circuit 10b).

Additionally, in the air conditioner 1 of the present embodiment, a pump down operation detection-use program for ensuring that the air conditioner 1 can perform pump down operation while protecting the compressor 21 is installed in the outdoor controller 36. Next, the pump down operation detection-use program during pump down operation will be described.

First, in step S1, the program detects that the four-way switch valve 22 is in the cooling operation switched state and that the compressor 21 is operating, which is a precondition for performing the pump down procedure. When it has been judged that this condition is satisfied, then the program moves to the next step S2, and when it has been judged that this condition is not satisfied, then the program ends the processing shown in FIG. 3.

Next, when the condition of step S 1 is satisfied, the program calculates the compressor power in step S2. Here, the compressor power is the value of the power supplied to the compressor motor 28 of the compressor 21 from the inverter 31 and is calculated by the following expression using the DC voltage value and the DC current value detected by the voltage/current detector 33.

$$\text{compressor power} = \text{DC voltage value} \times \text{DC current value}$$

Next, the program judges whether or not the compressor power calculated in step S2 is less than a determination power value for determining whether or not pump down operation is being performed. When it is judged that the compressor power is less than the determination power value, then the program regards that pump down operation is being performed and moves to steps (steps S5 to S11) for protectively stopping the compressor 21, and when it is judged that the compressor power is equal to or greater than the determination power value (i.e., that the determination condition is not satisfied), then the program moves to step S4. Here, the determination power value is set to a value that can occur in a state where the work of the compressor 21 to compress the refrigerant has become less due to pump down operation. Additionally, in the state before the air conditioner 1 performs the pump down procedure, as shown in FIG. 4, the compressor power before pump down operation is larger than the determination power value, so the program moves to step S4.

Next, in step S4, processing is performed which clears a timer used to count the stop time of the compressor 21 when the program has moved to the steps (steps S5 to S11) for protectively stopping the compressor 21, and the program returns to the processing of step S1. For this reason, in a state before the pump down procedure is performed when the air conditioner 1 is performing refrigeration cycle operation that causes the indoor heat exchanger 41 to function as an evaporator of the refrigerant such as cooling operation, processing is repeated in the order of steps S1, S2, S3, S4, and S1.

Next, a case where the air conditioner 1 has performed the pump down procedure will be described. When the air conditioner 1 performs the pump down procedure, as shown in FIG 4, the work of the compressor 21 to compress the refrigerant becomes less due to pump down operation, so the compressor power drops. For this reason, in step S3, the compressor power calculated in step S2 becomes less than the determination power value, it is judged that pump down operation is being performed, and the program moves to step S5. Here, the determination power value may be a predetermined fixed value, but in the compressor 21 driven by the inverter-controlled compressor motor 28, the load on the compressor 21 tends to become larger when the compressor operates at a high operating frequency in comparison to when the compressor operates at a low operating frequency, so it is preferable for the determination power value to be a function of the operating frequency. Further, the load on the compressor 21 tends to become larger when the compressor operates under a condition where the outdoor air temperature is high in comparison to when the compressor operates under a condition where the outdoor air temperature is low, so it is preferable for the determination power value to be a function of the outdoor air temperature detected in the outdoor unit 2. For this reason, in the present embodiment, a function of the operating frequency of the compressor 21 detected in the outdoor unit 2 and the outdoor air temperature detected by the outdoor air temperature sensor 35 is used as the determination power value. For example, a primary polynomial such as

$$\text{determination power value} = \text{coefficient A} \times \text{operating frequency} + \text{coefficient B} \times \text{outdoor air temperature} + \text{correction value C}$$

can be used as this function. Further, the program may also be configured to calculate a more accurate determination power value using a higher order polynomial such as secondary or tertiary rather than with just this primary polynomial.

Next, when the condition of step S3 is satisfied, it is judged in step S5 whether or not the timer is in the middle of counting. Here, the program moves to step S7 because the condition of step S5 is satisfied excluding when the program has first moved to step S5 after the air conditioner 1 performs the pump down procedure or when the program has moved to step S5 after the timer has been cleared in step S4. On the other hand, because this condition is not satisfied when the program has first moved to step S5 after the air conditioner 1 performs the pump down procedure or when the program has moved to step S5 after the timer has been cleared in step S4, the program moves to step S6 and counting by the timer is started.

Next, in step S7, the program calculates the stop time of the compressor 21. In the present embodiment, the value of the stop time is a value that is determined in consideration of the standpoint of preventing damage to the compressor motor 28 and other configural parts of the compressor 21, and is a function of the operating frequency because, in the compressor 21 driven by the inverter-controlled compressor motor 28, the load on the compressor 21 tends to become larger when the compressor operates at a high operating frequency in comparison to when the compressor operates at a low operating frequency. Further, the load on the compressor 21 tends to become larger when the compressor operates under a condition where the outdoor air temperature is high in comparison to when the compressor operates under a condition where the outdoor air temperature is low, so the value of the stop time is a function of the outdoor air temperature detected in the outdoor unit 2. That is, in the present embodiment, a function of the operating frequency of the compressor 21 detected in the outdoor unit 2 and the outdoor air temperature detected by the outdoor air temperature sensor 35 is used as the value of the stop time. For example, a primary polynomial such as

$$\text{stop time} = \text{coefficient D} \times \text{operating frequency} + \text{coefficient E} \times \text{outdoor air temperature} + \text{correction value F}$$

can be used as this function. Further, the program may also be configured to calculate a more accurate stop time using a higher order polynomial such as secondary or tertiary rather than with just this primary polynomial.

Next, in step S8, it is judged whether or not time has elapsed beyond the stop time calculated in step S7. Here, when the stop time has elapsed, the program moves to step S9 and the compressor 21 is protectively stopped. Additionally, in the present embodiment, in order to inform a pump down worker or the like that the compressor 21 has been protectively stopped, processing to LED-display this on the outdoor unit 2 or the indoor unit 4 is performed (step S10).

On the other hand, when the stop time has not elapsed in step S8, the program moves to step S11, where it is judged whether or not the operating frequency of the compressor 21 or the outdoor air temperature detected by the outdoor air temperature sensor 35 has changed, and when it has been judged that there is no change in the operating frequency or the outdoor air temperature, then the program returns to step S8 and processing that is the same as described above is performed. However, when it has been judged in step S11 that there is a change in the operating frequency or the outdoor air temperature, then the program moves to step S1.

Additionally, when the program has moved from step S11 to step S1, the processing of step S 1 and step S2 is again performed, and thereafter in step S3, the program recalculates a determination power value suited for determining whether or not pump down operation is being performed under the condition that the operating frequency or the outdoor air temperature has changed. Then, the program compares the recalculated determination power value and the compressor power, and when it is judged that the compressor power is less than the determination power value, then the program moves to the processing of step S5 on. Here, in step S5, as long as the timer is not cleared in step S4, then the program moves to step S7 in a state where counting by the timer before moving from step S11 to step S 1 has continued, so the effect is the same as when the program has recalculated the stop time in step S7 as a result of the operating frequency or the outdoor air temperature changing in step S11.

On the other hand, when it has been judged in step S3 that the compressor power is equal to or greater than the determination power value, then the program moves to step S 1 after the timer has been cleared in step S4, so as a result, detection processing of pump down operation is performed from the start.

As described above, the air conditioner 1 of the present embodiment can perform pump down operation while protecting the compressor 21 by pump down operation detection logic.

(3) Characteristics of Air Conditioner

The air conditioner 1 of the present embodiment has the following characteristics.

(A) The air conditioner 1 of the present embodiment is configured to detect pump down operation by determining whether or not pump down operation is being performed in a state of refrigeration cycle operation that causes the indoor heat exchanger 41 to function as an evaporator of the refrigerant on the basis of the compressor power supplied to the compressor motor 28 from the inverter 31 utilizing the fact that the compressor 21 has the operating characteristic that the work of compressing the refrigerant becomes less and power consumption becomes smaller during pump down operation. In this manner, because the air conditioner 1 is configured to detect pump down operation on the basis of the operating characteristic of the compressor 21 rather than changes in the state value of the refrigerant flowing inside the refrigerant circuit as has conventionally been the case, the air conditioner 1 can perform pump down operation while reliably protecting the compressor 21. Moreover, because the air conditioner 1 is configured to detect pump down operation using the compressor power of the compressor 21, it is difficult for the air conditioner 1 to be affected by fluctuations in the voltage of the commercial power supply 32, and because the air conditioner 1 uses the power value of the compressor motor 28 driving the compressor 21 from the inverter 31, the air conditioner 1 is also not affected by the power consumed by electrical parts other than the compressor motor 28 driving the compressor 21, which can also contribute to improving the detection precision of pump down operation.

(B) Further, in the present embodiment, the air conditioner 1 is configured to determine whether or not pump down operation is being performed by determining whether or not the compressor power is less than the determination power value. Additionally, the air conditioner 1 can sufficiently protect the compressor because this determination power value is calculated as a function of the operating frequency and the outdoor air temperature which tend to affect the load on the compressor 21.

(C) Moreover, in the present embodiment, a stop time corresponding to strength of the compressor can be set because the time until the air conditioner 1 stops the compressor 21 after detecting pump down operation is also calculated as a function of the operating frequency and the outdoor air temperature which tend to affect the load on the compressor 21. Thus, it becomes possible for the air conditioner 1 to avoid the stop time from being too long or too short, and the air conditioner 1 can sufficiently protect the compressor.

(4) Modification

In the preceding embodiment, the air conditioner 1 determined whether or not pump down operation was being performed by determining whether or not the compressor power was less than the determination power value, but the invention is not limited to this and, as shown in FIG. 4, the air conditioner 1 may also use the rate of change when the compressor power of the compressor 21 drops during pump down operation. For example, the air conditioner 1 can determine whether or not pump down operation is being performed by the rate of change when the compressor power of the compressor 21 drops during pump down operation being smaller than a predetermined determination rate of change (i.e., when the slope when the compressor power drops becomes sharper than the slope corresponding to the determination rate change).

Further, the air conditioner 1 may also determine whether or not pump down operation is being performed using a variation width of a power value when the compressor power of the compressor 21 drops during pump down operation, as shown in FIG. 4. For example, the air conditioner 1 can determine whether or not pump down operation is being performed by the absolute value of the variation width of the power value when the compressor power of the compressor 21 drops during pump down operation (more specifically, when the absolute value of the variation width until the compressor power becomes a constant power value after the drop in the compressor power starts from the power value immediately before pump down operation) being larger than a predetermined determination variation width.

(Second Embodiment)

In the preceding first embodiment and modification thereof, an example was described where the present invention was applied to the detection of pump down operation, but the invention is not limited to this. When the air conditioner performs operation in a state where a close valve is closed due to poor construction or performs operation in a state where a refrigerant pipe is clogged or in a state where various functional components such as an expansion valve, an electromagnetic valve, a filter, a close valve, or a four-way switch valve have failed, and when the place where that problem has occurred is an indoor heat exchanger functioning as a condenser, a refrigerant pipe between the outlet of an outdoor heat exchanger and the intake side of a compressor, or the various functional components, it is also possible to apply the present invention to failure detection such as when a close valve is closed due to poor construction, when a refrigerant pipe has become clogged, and when a state occurs where various functional components have failed, because the compressor has the operating characteristic that the work of compressing the refrigerant becomes less and power consumption becomes smaller in comparison to when the air conditioner is normally performing refrigeration cycle operation.

A second embodiment serving as an example where the present invention is applied to failure detection will be described below.

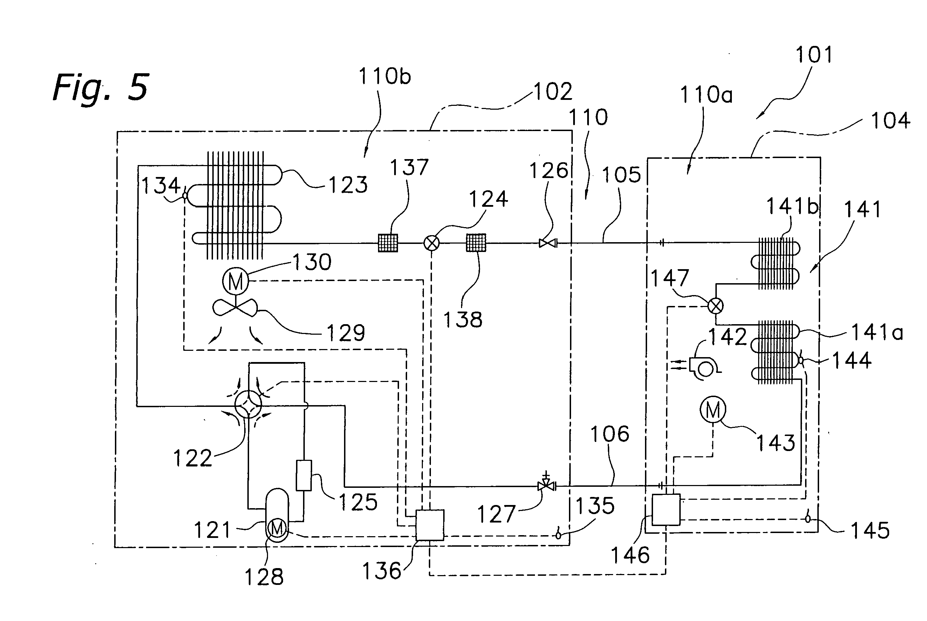

First, the configuration of an air conditioner pertaining to the present embodiment will be described on the basis of FIG. 5. Here, FIG. 5 is a general configural diagram of a refrigerant circuit of an air conditioner pertaining to the second embodiment of the present invention. An air conditioner 101 is a so-called separate-type air conditioner disposed with an outdoor unit 102, an indoor unit 104, and a liquid refrigerant communication pipe 105 and a gas refrigerant communication pipe 106 that interconnect the outdoor unit 102 and the indoor unit 104. A vapor compression-type refrigerant circuit 110 of the air conditioner 101 is configured by the interconnection of the outdoor unit 102, the indoor unit 104, the liquid refrigerant communication pipe 105 and the gas refrigerant communication pipe 106, and as will be described later, is capable of switching and operating between cooling operation, dehumidifying operation, and heating operation.

<Indoor Unit>

The indoor unit 104 is installed in the surface of a wall or the like inside a room. The indoor unit 104 is connected to the outdoor unit 102 via the refrigerant communication pipes 105 and 106 and configures part of the refrigerant circuit 110.

Next, the configuration of the indoor unit 104 will be described. The indoor unit 104 is mainly disposed with an indoor refrigerant circuit 110a that configures part of the refrigerant circuit 110. The indoor refrigerant circuit 110a is mainly disposed with an indoor heat exchanger 141. In the present embodiment, a heat exchange portion 141 mainly includes a first heat exchange portion 141a and a second heat exchange portion 141b. The first heat exchange portion 141a and the second heat exchange portion 141b are cross fin-type fin-and-tube heat exchangers configured by a heat exchanger tube and numerous fins, and are devices for performing heat exchange between refrigerant and room air. Here, the first heat exchange portion 141a and the second heat exchange portion 141b are interconnected via a dehumidification-use electromagnetic valve 147. Here, the dehumidification-use electromagnetic valve 147 is an electromagnetic valve that is capable of being switched to an open state during later-described cooling operation and heating operation and to a closed state (specifically, this means a state where the valve is not fully closed but slightly open) during later-described dehumidifying operation. Thus, during cooling operation, the first heat exchange portion 141a and the second heat exchange portion 141b function as evaporators of the refrigerant. During heating operation, the first heat exchange portion 141a and the second heat exchange portion 141b function as condensers of the refrigerant. Further, during dehumidifying operation, the second heat exchange portion 141b functions as a cooler of the refrigerant and the first heat exchange portion 141a functions as an evaporator of the refrigerant. It will be noted that the dehumidification-use electromagnetic valve 147 does not have to be an electromagnetic valve and that it is also possible to use another pressure-reducing device such as an electrically powered expansion valve.

Further, in the present embodiment, the indoor unit 104 is disposed with an indoor fan 142 for taking room air into the unit, causing the room air to pass through the indoor heat exchanger 141, and thereafter supplying the air into the room as supply air, so that the indoor unit 104 is capable of causing heat to be exchanged between the room air and the refrigerant flowing through the indoor heat exchanger 141. Thus, during cooling operation, the room air is cooled by the refrigerant evaporated inside the first heat exchange portion 141 a and the second heat exchange portion 141 b. During heating operation, the room air is heated by the refrigerant condensed inside the first heat exchange portion 141 a and the second heat exchange portion 141b. Further, during dehumidifying operation, the room air is cooled by the refrigerant evaporated inside the first heat exchange portion 141a and heated by the refrigerant flowing inside the second heat exchange portion 141b. Thus, during dehumidifying operation of the present embodiment, reheating and dehumidifying operation that is a dehumidifying operation that performs only dehumidification of the room air can be performed without, as much as possible, lowering the temperature of the room air. It will be noted that the indoor fan 142 is driven to rotate by an indoor fan motor 143.

Further, an indoor heat exchange temperature sensor 144 that detects the temperature of the refrigerant flowing inside the indoor heat exchanger 141 and a room temperature sensor 145 that detects the room temperature and the like are disposed in the indoor unit 104. Further, the indoor unit 104 is disposed with an indoor controller 146 that controls the operation of each portion configuring the indoor unit 104. Additionally, the indoor controller 146 includes a microcomputer and a memory and the like disposed in order to control the indoor unit 104, and is configured such that it can exchange control signals and the like with a remote controller (not shown) and can exchange control signals and the like with the outdoor unit 102.

<Outdoor Unit>

The outdoor unit 102 is installed outdoors. The outdoor unit 102 is connected to the indoor unit 104 via the refrigerant communication pipes 105 and 106 and configures part of the refrigerant circuit 110.

Next, the configuration of the outdoor unit 102 will be described. The outdoor unit 102 is mainly disposed with an outdoor refrigerant circuit 110b that configures part of the refrigerant circuit 110. The outdoor refrigerant circuit 110b is mainly disposed with a compressor 121, a four-way switch valve 122, an outdoor heat exchanger 123, an electrically powered expansion valve 124, an accumulator 125, a liquid close valve 126, a gas close valve 127, and first and second filters 137 and 138.

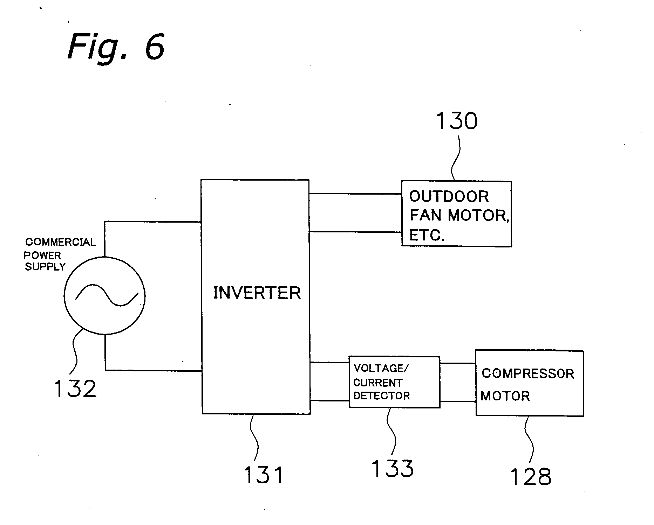

The compressor 121 is a compressor whose operational capacity can be varied, and is a positive displacement-type compressor driven by a compressor motor 128 controlled by an inverter 131 (see FIG. 6). The accumulator 125 is connected to an intake side of the compressor 121.

The four-way switch valve 122 is a valve for switching the direction of the flow of the refrigerant such that, during cooling operation and dehumidifying operation, the four-way switch valve 122 is capable of connecting a discharge side of the compressor 121 and a gas side of the outdoor heat exchanger 123 and connecting the intake side of the compressor 121 (specifically, the accumulator 125) and the gas refrigerant communication pipe 106 (specifically, the gas close valve 127) (see the solid lines of the four-way switch valve 122 in FIG. 5; called "cooling operation switched state" below) to cause the outdoor heat exchanger 123 to function as a condenser of the refrigerant compressed in the compressor 121 and to cause the indoor heat exchanger 141 to function as an evaporator of the refrigerant condensed in the outdoor heat exchanger 123, and such that, during heating operation, the four-way switch valve 122 is capable of connecting the discharge side of the compressor 121 and the gas refrigerant communication pipe 106 (specifically, the gas close valve 127) and connecting the intake side of the compressor 121 and the gas side of the outdoor heat exchanger 123 (see the dotted lines of the four-way switch valve 122 in FIG. 5; called "heating operation switched state" below) to cause the indoor heat exchanger 141 to function as a condenser of the refrigerant compressed in the compressor 121 and to cause the outdoor heat exchanger 123 to function as an evaporator of the refrigerant condensed in the indoor heat exchanger 141.

In the present embodiment, the outdoor heat exchanger 123 is a cross-fin type fin-and-tube heat exchanger configured by a heat exchanger tube and numerous fins, and is a heat exchanger that functions as a condenser of the refrigerant during cooling operation and as an evaporator of the refrigerant during heating operation. The gas side of the outdoor heat exchanger 123 is connected to the four-way switch valve 122, and the liquid side of the outdoor heat exchanger 123 is connected to the liquid refrigerant communication pipe 105. In the present embodiment, the outdoor unit 102 is disposed with an outdoor fan 129 for taking outdoor air into the unit, causing the air to pass through the outdoor heat exchanger 123, and thereafter discharging the air to the outside of the unit, so that the outdoor unit 102 is capable of causing heat to be exchanged between the outdoor air and the refrigerant flowing through the outdoor heat exchanger 123. The outdoor fan 129 is driven by an outdoor fan motor 130.

The electrically powered expansion valve 124 is an expansion valve whose opening is capable of being regulated and which functions such that, during cooling operation, its opening is regulated such that it reduces the pressure of the refrigerant condensed in the outdoor heat exchanger 123, and during heating operation, its opening is regulated such that it reduces the pressure of the refrigerant condensed in the indoor heat exchanger 141, and during dehumidifying operation, it is fully opened such that it does not, as much as possible, reduce the pressure of the refrigerant condensed in the outdoor heat exchanger 123. Further, the first and second filters 137 and 138 are filters disposed at the inlet and outlet of the electrically powered expansion valve 124, that is, between the outdoor heat exchanger 123 and the electrically powered expansion valve 124 and between the electrically powered expansion valve 124 and the liquid close valve 126.

The liquid close valve 126 and the gas close valve 127 are valves disposed at ports connected to external devices/pipes (specifically, the liquid refrigerant communication pipe 105 and the gas refrigerant communication pipe 106). The liquid close valve 126 is connected to the outdoor heat exchanger 123 via the electrically powered expansion valve 124 and the filters 137 and 138. The gas close valve 127 is connected to the four-way switch valve 122.

Further, an outdoor heat exchange temperature sensor 134 that detects the temperature of the refrigerant flowing inside the outdoor heat exchanger 123 and an outdoor air temperature sensor 135 that detects the outdoor air temperature and the like are disposed in the outdoor unit 102. Further, the outdoor unit 102 is disposed with an outdoor controller 136 that controls the operation of each portion configuring the outdoor unit 102. Additionally, the outdoor controller 136 includes a microcomputer and a memory disposed in order to control the outdoor unit 102 and the inverter 131 (see FIG. 6) that controls the compressor motor 128, and is configured such that it can exchange control signals and the like with the indoor controller 146 of the indoor unit 104. It will be noted that, as shown in the general electrical wiring diagram of the outdoor unit 102 shown in FIG. 6, the inverter 131 is connected to a commercial power supply 132, converts alternating current to direct current, and can apply DC voltage to the outdoor fan motor 130 and the compressor motor 128. Additionally, a voltage/current detector 133 for detecting the compressor power supplied to the compressor motor 128 from the inverter 131 is disposed between the inverter 131 and the compressor motor 128. Further, the outdoor unit 102 is configured such that it can detect the number of revolutions of the compressor 121, that is, the operating frequency of the compressor 121.

As described above, the refrigerant circuit 110 of the air conditioner 101 capable of switching and operating between cooling operation, heating operation, and dehumidifying operation is configured by the interconnection of the indoor refrigerant circuit 110a, the outdoor refrigerant circuit 110b, and the refrigerant communication pipes 105 and 106.

(2) Operation of Air Conditioner

Next, the operation of the air conditioner 101 will be described.

<Cooling Operation>

First, cooling operation will be described using FIG. 5.

During cooling operation, the four-way switch valve 122 is in the cooling operation switched state. Further, the liquid close valve 126, the gas close valve 127, the electrically powered expansion valve 124, and the dehumidification-use electromagnetic valve 147 are open.

When the outdoor fan 129 of the outdoor unit 102, the compressor 121, and the indoor fan 142 of the indoor unit 104 are started in this state of the refrigerant circuit, gas refrigerant is taken into the compressor 121 and compressed, and is thereafter sent to the outdoor heat exchanger 123 via the four-way switch valve 122. Then, the refrigerant sent to the outdoor heat exchanger 123 heats the outdoor air and is condensed. Here, the outdoor air is taken into the outdoor unit 102 by the driving of the outdoor fan 129, heat exchange is performed with the refrigerant in the outdoor heat exchanger 123, and the outdoor air is discharged to the outside of the outdoor unit 102. Then, the liquid refrigerant condensed in the outdoor heat exchanger 123 is depressurized in the electrically powered expansion valve 124 after passing through the first filter 137, and is thereafter sent to the indoor unit 104 via the second filter 138, the liquid close valve 126, and the liquid refrigerant communication pipe 105. Then, the liquid refrigerant sent to the indoor unit 104 cools the room air and is evaporated in the indoor heat exchanger 141. Specifically, the liquid refrigerant sent to the indoor unit 104 passes in order through the second heat exchange portion 141 b functioning as an evaporator of the refrigerant, the dehumidification-use electromagnetic valve 147, and the first heat exchange portion 141a functioning as an evaporator of the refrigerant, and is evaporated. Here, the room air is taken into the indoor unit 104 by the driving of the indoor fan 142, heat exchange is performed with the refrigerant in the indoor heat exchanger 141, and the room air is blown out into the room from the indoor unit 104. Then, the gas refrigerant evaporated in the indoor heat exchanger 141 is returned to the outdoor unit 102 via the gas refrigerant communication pipe 106. Then, the gas refrigerant returned to the outdoor unit 102 is again taken into the compressor 121 via the gas close valve 127, the four-way switch valve 122, and the accumulator 125. In this manner, cooling operation is performed.

<Heating Operation>

Next, heating operation will be described using FIG. 5.

During heating operation, the four-way switch valve 122 is in the heating operation switched state. Further, the liquid close valve 126, the gas close valve 127, the electrically powered expansion valve 124, and the dehumidification-use electromagnetic valve 147 are open.

When the outdoor fan 129 of the outdoor unit 102, the compressor 121, and the indoor fan 142 of the indoor unit 104 are started in this state of the refrigerant circuit, gas refrigerant is taken into the compressor 121 and compressed, and is thereafter sent to the indoor unit 104 via the four-way switch valve 122, the gas close valve 127, and the gas refrigerant communication pipe 106. Then, the gas refrigerant sent to the indoor unit 104 heats the room air and is condensed in the indoor heat exchanger 141. Specifically, the liquid refrigerant sent to the indoor unit 104 passes in order through the first heat exchange portion 141a functioning as a condenser of the refrigerant, the dehumidification-use electromagnetic valve 147, and the second heat exchange portion 141b functioning as a condenser of the refrigerant, and is condensed. Then, the liquid refrigerant condensed in the indoor heat exchanger 141 is sent to the outdoor unit 102 via the liquid refrigerant communication pipe 105. Then, the liquid refrigerant sent to the outdoor unit 102 is sent to the electrically powered expansion valve 124 via the liquid close valve 126 and the second filter 138, is depressurized, sent to the outdoor heat exchanger via the first filter 137, and cools the outdoor air and is evaporated in the outdoor heat exchanger 123. The gas refrigerant evaporated in the outdoor heat exchanger 123 is again taken into the compressor 121 via the four-way switch valve 122 and the accumulator 125. In this manner, heating operation is performed. It will be noted that, because the flows of the outdoor air and the room air are the same as during cooling operation, description thereof is omitted.

<Dehumidifying Operation>

First, dehumidifying operation will be described using FIG. 5.

During dehumidifying operation, the four-way switch valve 122 is in the cooling operation switched state. Further, the liquid close valve 126, the gas close valve 127, and the electrically powered expansion valve 124 are open, and the dehumidification-use electromagnetic valve 147 is closed.

When the outdoor fan 129 of the outdoor unit 102, the compressor 121, and the indoor fan 142 of the indoor unit 104 are started in this state of the refrigerant circuit, gas refrigerant is taken into the compressor 121 and compressed, and is thereafter sent to the outdoor heat exchanger 123 via the four-way switch valve 122. Then, the refrigerant sent to the outdoor heat exchanger 123 heats the outdoor air and is condensed. Then, the liquid refrigerant condensed in the outdoor heat exchanger 123 is sent to the indoor unit 104 via the first filter 137, the electrically powered expansion valve 124, the second filter 138, the liquid close valve 126, and the liquid refrigerant communication pipe 105. Here, the electrically powered expansion valve 124 is fully opened such that it does not, as much as possible, reduce the pressure of the refrigerant condensed in the outdoor heat exchanger 123. Then, the liquid refrigerant sent to the indoor unit 104 cools the room air and is evaporated in the indoor heat exchanger 141. Specifically, the liquid refrigerant sent to the indoor unit 104 is cooled in the second heat exchange portion 141b (at this time, the room air is heated), is thereafter sent to the dehumidification-use electromagnetic valve 147, depressurized, and is then evaporated in the first heat exchange portion 141a (at this time, the room air is cooled). Then, the gas refrigerant evaporated in the indoor heat exchanger 141 is returned to the outdoor unit 102 via the gas refrigerant communication pipe 106. Then, the gas refrigerant returned to the outdoor unit 102 is again taken into the compressor 121 via the gas close valve 127, the four-way switch valve 122, and the accumulator 125. In this manner, dehumidifying operation is performed. It will be noted that, because the flows of the outdoor air and the room air are the same as during cooling operation, description thereof is omitted.

<Failure Detection>

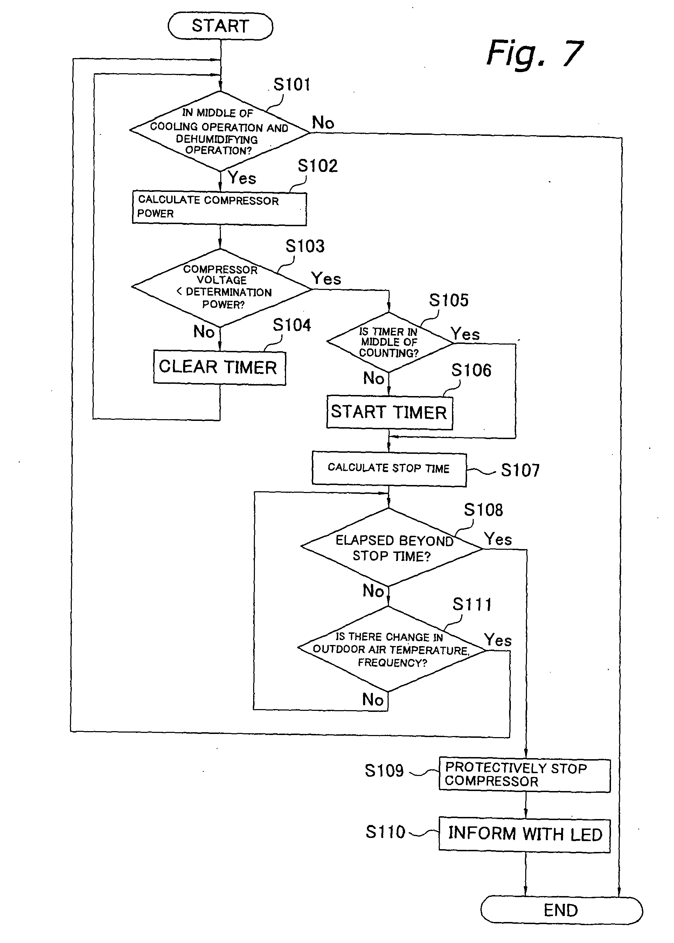

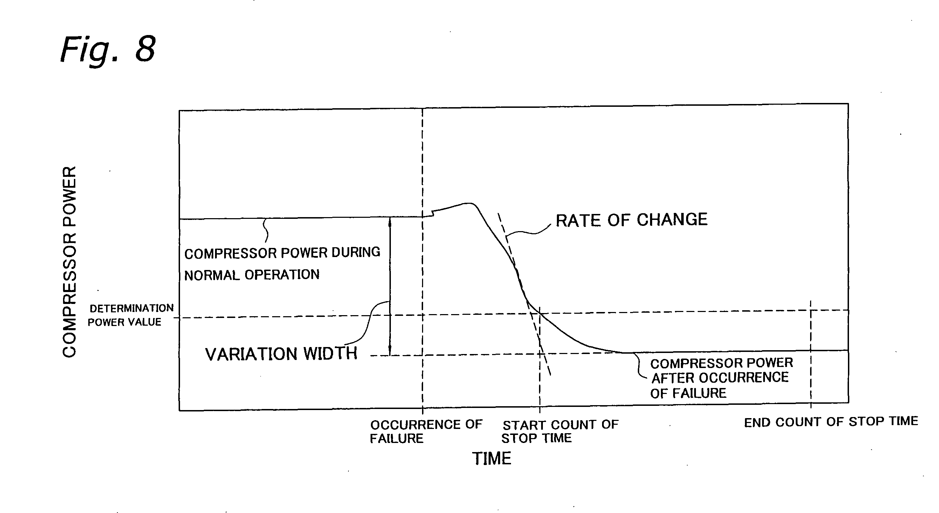

Next, failure detection during the above-described cooling operation, heating operation, and dehumidifying operation will be described, using cooling operation as an example, using FIG. 5 to FIG 8. Here, FIG. 7 is a flowchart showing operation to protectively stop the compressor during failure, and FIG 8 is a diagram showing temporal changes in compressor power during failure.

During cooling operation or dehumidifying operation, as mentioned above, when operation is performed normally, low-pressure refrigerant flows in the various functional components and the refrigerant pipe between the outlet of the electrically powered expansion valve 124 and the intake side of the compressor 121. Additionally, in order to maintain normal cooling operation or dehumidifying operation, it is necessary that the fluid resistance of the refrigerant does not become abnormally large as a result of a problem occurring in the various functional components or the refrigerant pipe between the outlet of the outdoor heat exchanger 123 functioning as a condenser of the refrigerant and the intake side of the compressor 121.

However, when a problem occurs, such as the electrically powered expansion valve 124 or the close valves 126 and 127 failing and becoming closed or clogging occurring in the dehumidification-use electromagnetic valve 147 during dehumidifying operation, the operating characteristic can be seen where the work of the compressor to compress the refrigerant becomes less and the consumed power becomes smaller, as shown in FIG. 8.

Additionally, in the air conditioner 101 of the present embodiment, a program for detecting that a problem (called "failure" below) has occurred in the various functional components or the refrigerant pipe between the outlet of the outdoor heat exchanger 123 functioning as a condenser of the refrigerant and the intake side of the compressor 121 is installed in the indoor controller 146 and the outdoor controller 136. Next, the logic of the failure detection-use program will be described.

First, in step S101, the program detects that the air conditioner is in the middle of cooling operation or dehumidifying operation. When it has been judged that this condition is satisfied, then the program moves to the next step S102, and when it has been judged that this condition is not satisfied, then the program ends the processing shown in FIG. 7.

Next, when the condition of step S101 is satisfied, the program calculates the compressor power in step S102. Here, the compressor power is the value of the power supplied to the compressor motor 128 of the compressor 121 from the inverter 131, and is calculated by the following expression using the DC voltage value and the DC current value detected by the voltage/current detector 133.

$$\text{compressor power} = \text{DC voltage value} \times \text{DC current value}$$

Next, the program judges whether or not the compressor power calculated in step S102 is less than a determination power value for determining whether or not pump down operation is being performed. When it is judged that the compressor power is less than the determination power value, then the program regards that pump down operation is being performed and moves to steps (steps S 105 to S111) for protectively stopping the compressor 121, and when it is judged that the compressor power is equal to or greater than the determination power value (i.e., that the determination condition is not satisfied), then the program moves to step S104. Here, the determination power value is set to a value that can occur in a state where the work of the compressor 121 to compress the refrigerant has become less due to failure. In a state where failure has not occurred, as shown in FIG. 8, the compressor power in a state where failure has not occurred is larger than the determination power value, so the program moves to step S104.

Next, in step S104, processing is performed which clears a timer used to count the stop time of the compressor 121 when the program has moved to the steps (steps S105 to S111) for protectively stopping the compressor 121, and then the program returns to the processing of step S101. For this reason, when normal cooling operation is being performed, processing is repeated in the order of steps S101,S102,S103,S104,andS101.

Next, a case where failure has occurred will be described. When failure occurs, as shown in FIG. 8, the work of the compressor 121 to compress the refrigerant becomes less, so the compressor power drops. For this reason, in step S103, the compressor power calculated in step S102 becomes less than the determination power value, it is judged that failure has occurred, and the program moves to step S105. Here, the determination power value may be a predetermined fixed value, but in the compressor 121 driven by the inverter-controlled compressor motor 128, the load on the compressor 121 tends to become larger when the compressor operates at a high operating frequency in comparison to when the compressor operates at a low operating frequency, so it is preferable for the determination power value to be a function of the operating frequency. Further, the load on the compressor 121 tends to become larger when the compressor operates under a condition where the outdoor air temperature is high in comparison to when the compressor operates under a conditioner where the outdoor air temperature is low, so it is preferable for the determination power value to be a function of the outdoor air temperature detected in the outdoor unit 102. For this reason, in the present embodiment, a function of the operating frequency of the compressor 121 detected in the outdoor unit 102 and the outdoor air temperature detected by the outdoor air temperature sensor 135 is used as the determination power value. For example, a primary polynomial such as

$$\text{determination power value} = \text{coefficient A} \times \text{operating frequency} + \text{coefficient B} \times$$
$$\text{outdoor air temperature} + \text{correction value C}$$

can be used as this function. Further, the program may also be configured to calculate a more accurate determination power value using a higher order polynomial such as secondary or tertiary rather than with just this primary polynomial.

Next, when the condition of step S103 is satisfied, it is judged in step S105 whether or not the timer is in the middle of counting. Here, the program moves to step S107 because the condition of step S105 is satisfied excluding when the program has first moved to step S105 after failure occurs or when the program has moved to step S105 after the timer has been cleared in step S104. On the other hand, because this condition is not satisfied when the program has first moved to step S105 after failure occurs or when the program has moved to step S105 after the timer has been cleared in step S104, the program moves to step S 106 and counting by the timer is started.

Next, in step S107, the stop time of the compressor 121 is calculated. In the present embodiment, the value of the stop time is a value that is determined in consideration of the standpoint of preventing damage to the compressor motor 128 and other configural parts of the compressor 121, and is a function of the operating frequency because, in the compressor 121 driven by the inverter-controlled compressor motor 128, the load on the compressor 121 tends to become larger when the compressor operates at a high operating frequency in comparison to when the compressor operates at a low operating frequency. Further, the load on the compressor 121 tends to become larger when the compressor operates under a condition where the outdoor air temperature is high in comparison to when the compressor operates under a condition where the outdoor air temperature is low, so the value of the stop time is a function of the outdoor air temperature detected in the outdoor unit 102. That is, in the present embodiment, a function of the operating frequency of the compressor 121 detected in the outdoor unit 102 and the outdoor air temperature detected by the outdoor air temperature sensor 135 is used as the value of the stop time. For example, a primary polynomial such as

$$\text{stop time} = \text{coefficient D} \times \text{operating frequency} + \text{coefficient E} \times \text{outdoor air}$$
$$\text{temperature} + \text{correction value F}$$

can be used as this function. Further, the program may also be configured to calculate a more accurate stop time using a higher order polynomial such as secondary or tertiary rather than with just this primary polynomial.

Next, in step S108, it is judged whether or not time has elapsed beyond the stop time calculated in step S107. Here, when the stop time has elapsed, the program moves to step S109 and the compressor 121 is protectively stopped. Additionally, in the present embodiment, in order to inform a user or the like that the compressor 121 has been protectively stopped, processing to LED-display this on the outdoor unit 102 or the indoor unit 104 is performed (step S 110).

On the other hand, when the stop time has not elapsed in step S 108, the program moves to step S111, where it is judged whether or not the operating frequency of the compressor 121 or the outdoor air temperature detected by the outdoor air temperature sensor 135 has changed, and when it has been judged that there is no change in the operating frequency or the outdoor air temperature, then the program returns to step S 108 and processing that is the same as described above is performed. However, when it has been judged in step S111 that there is a change in the operating frequency or the outdoor air temperature, then the program moves to step S101.

Additionally, when the program has moved from step S111 to step S101, the processing of step S101 and step S102 is again performed, and thereafter in step S103, the program recalculates a determination power value suited for determining whether or not failure is occurring under the condition that the operating frequency or the outdoor air temperature has changed. Then, the program compares the recalculated determination power value and the compressor power, and when it is judged that the compressor power is less than the determination power value, then the program moves to the processing of step S105 on. Here, in step S105, as long as the timer is not cleared in step S104, then the program moves to step S107 in a state where counting by the timer before moving from step S111 to step S101 has continued, so the effect is the same as when the program has recalculated the stop time in step S107 as a result of the operating frequency or the outdoor air temperature changing in step S111.

On the other hand, when it has been judged in step S103 that the compressor power is equal to or greater than the determination power value, then the program moves to step S101 after the timer has been cleared in step S104, so as a result, failure detection processing is performed from the start. In this manner, the air conditioner can perform failure detection processing during cooling operation and dehumidifying operation.

Further, during heating operation also, when operation is normally performed, low-pressure refrigerant flows in the various functional components and the refrigerant pipe between the outlet of the electrically powered expansion valve 124 and the intake side of the compressor 121. Additionally, in order to maintain normal heating operation, it is necessary that the fluid resistance of the refrigerant does not become abnormally large as a result of a problem occurring in the various functional parts or the refrigerant pipe between the outlet of the indoor heat exchanger 141 (specifically, the second heat exchange portion 141 b) functioning as a condenser of the refrigerant and the intake side of the compressor 121. For this reason, the functional components and the refrigerant pipe that are the target of failure detection differ, but the air conditioner can perform failure detection by failure detection processing that is the same as during cooling operation and dehumidifying operation.

As described above, the air conditioner 101 of the present embodiment can protect the compressor 121 by failure detection logic that does not stop the compressor 121 on the basis of the compressor power.

(3) Characteristics of Air Conditioner

The air conditioner 101 of the present embodiment has the following characteristics.

(A)
In the air conditioner 101 of the present embodiment, when the air conditioner 101 performs operation in a state where the close valves 126 and 127 are closed due to poor construction or performs operation in a state where a refrigerant pipe is clogged or in a state where various functional components such as the electrically powered expansion valve 124, the dehumidification-use expansion valve 147, the filters 137 and 138, the close valves 126 and 127, and the four-way switch valve 122 have failed, and when the place where that problem (called "failure" below) has occurred is the outdoor heat exchanger 123 functioning as a condenser or the various functional components or the refrigerant pipe between the outlet of the indoor heat exchanger 141 and the intake side of the compressor 121, the air conditioner 101 uses the fact that the compressor 121 has the operating characteristic that the work of compressing the refrigerant becomes less and the consumed power becomes smaller to perform, on the basis of the compressor power supplied to the compressor motor 128 from the inverter 131 during refrigeration cycle operation (in the present embodiment, cooling operation, heating operation, or dehumidifying operation) of the refrigerant circuit 110, failure detection of the outdoor heat exchanger 123 functioning as a condenser or the various functional components or the refrigerant pipe between the outlet of the indoor heat exchanger 141 and the intake side of the compressor 121. In this manner, because the air conditioner is configured to perform failure detection on the basis of the operating characteristic of the compressor 121, the air conditioner 101 can reliably protect the compressor 121. Moreover, because the air conditioner 101 is configured to perform failure detection using the compressor power of the compressor 121, it is difficult for the air conditioner 101 to be affected by fluctuations in the voltage of the commercial power supply, and because the air conditioner 101 uses the power value of the compressor motor 128 driving the compressor 121 from the inverter 131, the air conditioner 101 is also not affected by the power consumed by electrical parts other than the compressor motor 128 driving the compressor 121, which can also contribute to improving the detection precision of failure detection.
(B) Further, in the present embodiment, the air conditioner 101 is configured to determine whether or not failure is occurring by determining whether or not the compressor power is less than the determination power value. Additionally, the air conditioner 101 can sufficiently protect the compressor because this determination power value is calculated as a function of the operating frequency and the outdoor air temperature which tend to affect the load on the compressor 121.
(C) Moreover, in the present embodiment, a stop time corresponding to strength of the compressor can be set because the time until the air conditioner 101 stops the compressor 121 after detecting failure is also calculated as a function of the operating frequency and the outdoor air temperature which tend to affect the load on the compressor 121. Thus, it becomes possible for the air conditioner 101 to avoid the stop time from being too long or too short, and the air conditioner 101 can sufficiently protect the compressor.

(4) Modification

In the preceding embodiment, the air conditioner 101 determined whether or not failure was occurring by determining whether or not the compressor power was less than the determination power value, but the invention is not limited to this and, as shown in FIG. 8, the air conditioner 101 may also use the rate of change when the compressor power of the compressor 121 drops. For example, the air conditioner 101 can determine whether or not failure is occurring by the rate of change when the compressor power of the compressor 121 drops being smaller than a predetermined determination rate of change (i.e., when the slope when the compressor power drops becomes sharper than the slope corresponding to the determination rate change).
Further, the air conditioner 101 may also determine whether or not failure is occurring using a variation width of a power value when the compressor power of the compressor 121 drops, as shown in FIG. 8. For example, the air conditioner 101 can also determine whether or not failure is occurring by the absolute value of the variation width of the power value when the compressor power of the compressor 121 drops (more specifically, the absolute value of the variation width until the compressor power becomes a constant power value after the drop in the compressor power starts from the power value in the case when failure is not occurring) becomes larger than a predetermined determination variation width.

**INDUSTRIAL APPLICABILITY**

By utilizing the present invention, an air conditioner where an outdoor unit and an indoor unit are interconnected via communication pipes can perform pump down operation while reliably protecting the compressor. Further, the air conditioner can reliably protect the compressor even when poor construction, failure of various functional components or the like occurs.

**Claims**

1. An air conditioner (1) comprising:

   an outdoor unit (2) including a gas close valve (27), a compressor (21) driven by a motor (28) controlled by an inverter (31), an outdoor heat exchanger (23), an expansion valve (24), and a liquid close valve (26);
   an indoor unit (4) including an indoor heat exchanger (41); and
   communication pipes (5, 6) that interconnect the outdoor unit and the indoor unit,
   wherein the air conditioner determines, on the basis of compressor power supplied to the motor from the inverter, whether or not pump down operation is being performed in a state of refrigeration cycle operation that causes the indoor heat exchanger to function as an evaporator of refrigerant, and when pump down operation is being performed, the air conditioner stops the compressor after a predetermined stop time has elapsed.

2. The air conditioner (1) as recited in claim 1, wherein the air conditioner determines that pump down operation is being performed when the compressor power is less than a predetermined determination power value.

3. The air conditioner (1) as recited in claim 2, wherein the determination power value is calculated in consideration of operating frequency of the compressor (21).

4. The air conditioner (1) as recited in claim 3, wherein the determination power value is calculated also further in consideration of outdoor air temperature.

5. The air conditioner (1) as recited in claim 1, wherein the air conditioner determines that pump down operation is being performed when a rate of change of a power value when the compressor power drops has become smaller than a predetermined determination rate of change.

6. The air conditioner (1) as recited in claim 1, wherein the air conditioner determines that pump down operation is being performed when an absolute value of a variation width of a power value when the compressor power drops has become larger than a predetermined determination variation width.

7. The air conditioner (1) as recited in any of claims 1 to 6, wherein the stop time is calculated in consideration of the operating frequency of the compressor (21).

8. The air conditioner (1) as recited in claim 7, wherein the stop time is calculated also further in consideration of outdoor air temperature.

9. An air conditioner (l, 101) comprising a vapor compression-type refrigerant circuit (10, 110) including a compressor (21, 121) driven by a motor (28, 128) controlled by an inverter (31, 131), a condenser (23) (123, 141), an expansion valve (24, 124), and an evaporator (41) (141, 123),
   wherein the air conditioner stops the compressor on the basis of compressor power supplied to the motor from the inverter during refrigeration cycle operation of the refrigerant circuit.

Fig. 1

# Fig. 2

COMMERCIAL POWER SUPPLY

32

INVERTER

31

30

OUTDOOR FAN MOTOR, ETC.

VOLTAGE/ CURRENT DETECTOR

33

COMPRESSOR MOTOR

28

**Fig. 3**

```
                    START
                      │
      ┌───────────────┤
      │   ┌───────────┤
      │   │           │ S1
      │   │        ╱COOLING╲        No
      │   │      ╱AND COMPRESSOR╲──────────────────┐
      │   │      ╲ OPERATING? ╱                    │
      │   │        ╲        ╱                       │
      │   │           │ Yes      S2                 │
      │   │     ┌─────────────────┐                 │
      │   │     │CALCULATE        │                 │
      │   │     │COMPRESSOR POWER │                 │
      │   │     └─────────────────┘                 │
      │   │           │      S3                     │
      │   │       ╱COMPRESSOR╲    Yes               │
      │   │      ╱  VOLTAGE    ╲─────────┐          │
      │   │      ╲< DETERMINATION╱        │         │
      │   │       ╲  POWER? ╱             │         │
      │   │        No   │       S4      S5│         │
      │   │     ┌───────────┐     ╱IS TIMER IN╲ Yes │
      │   │     │CLEAR TIMER│    ╱ MIDDLE OF    ╲───┐│
      │   │     └───────────┘    ╲ COUNTING?   ╱   ││
      │   └──────────│             ╲         ╱     ││
      │              │          No   │    S6       ││
      │              │        ┌──────────────┐     ││
      │              │        │ START TIMER  │     ││
      │              │        └──────────────┘     ││
      │              │               │◄────────────┘│
      │              │     ┌────────────────────┐   │
      │              │     │CALCULATE STOP TIME │─S7│
      │              │     └────────────────────┘   │
      │              │    ┌──────│                   │
      │              │    │      │      S8           │
      │              │    │   ╱ELAPSED╲   Yes        │
      │              │    │  ╱BEYOND STOP TIME?╲─────┤
      │              │    │  ╲              ╱        │
      │              │    │     No │    S11          │
      │              │    │    ╱IS THERE CHANGE╲ Yes │
      │              │    │   ╱IN OUTDOOR AIR    ╲───┤
      │              │    │   ╲TEMPERATURE,      ╱   │
      │              │    │    ╲FREQUENCY?     ╱     │
      │              │    │        No │             │
      │              │    └───────────┘             │
      │              │                              │
      │              │          ┌─────────────────┐ │
      │              │  S9 ─────│PROTECTIVELY STOP│ │
      │              │          │COMPRESSOR       │ │
      │              │          └─────────────────┘ │
      │              │                  │           │
      │              │  S10 ──│INFORM WITH LED│     │
      │              │          └─────────────────┘ │
      │              │                  │           │
      │              │               ┌─────┐        │
      │              └───────────────│ END │◄───────┘
                                     └─────┘
```

*Fig. 4*

COMPRESSOR POWER

RATE OF CHANGE

COMPRESSOR POWER BEFORE PUMP DOWN OPERATION

COMPRESSOR POWER AFTER PUMP DOWN PROCEDURE

DETERMINATION POWER VALUE

VARIATION WIDTH

PUMP DOWN PROCEDURE

START COUNT OF STOP TIME

END COUNT OF STOP TIME

TIME

Fig. 5

## Fig. 6

Block diagram showing COMMERCIAL POWER SUPPLY (132) connected to INVERTER (131), which connects to OUTDOOR FAN MOTOR, ETC. (130) and through VOLTAGE/CURRENT DETECTOR (133) to COMPRESSOR MOTOR (128).

*Fig. 7*

EP 1 783 442 A1

## Fig. 8

COMPRESSOR POWER

COMPRESSOR POWER DURING
NORMAL OPERATION

RATE OF CHANGE

DETERMINATION
POWER VALUE

VARIATION WIDTH

COMPRESSOR POWER
AFTER OCCURRENCE
OF FAILURE

OCCURRENCE OF
FAILURE

START COUNT OF
STOP TIME

END COUNT OF STOP TIME

TIME

## INTERNATIONAL SEARCH REPORT

| | International application No. |
|---|---|
| | PCT/JP2005/013248 |

| A. CLASSIFICATION OF SUBJECT MATTER |
|---|
| *F25B1/00*(2006.01), *F24F11/02*(2006.01) |
| According to International Patent Classification (IPC) or to both national classification and IPC |

| B. FIELDS SEARCHED |
|---|
| Minimum documentation searched (classification system followed by classification symbols) |
| *F25B1/00*(2006.01), *F24F11/02*(2006.01) |

Documentation searched other than minimum documentation to the extent that such documents are included in the fields searched

| | | |
|---|---|---|
| Jitsuyo Shinan Koho | 1922-1996 | Jitsuyo Shinan Toroku Koho 1996-2005 |
| Kokai Jitsuyo Shinan Koho | 1971-2005 | Toroku Jitsuyo Shinan Koho 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2003-106689 A  (Sharp Corp.),<br>09 April, 2003 (09.04.03),<br>Par. Nos. [0013] to [0015]<br>(Family: none) | 9<br>1-8 |
| A | JP 5-280790 A  (Matsushita Refrigeration Co.),<br>26 October, 1993 (26.10.93),<br>Par. Nos. [0040] to [0043]; Figs. 5 to 6<br>(Family: none) | 1-8 |
| A | JP 5-322332 A  (Hitachi, Ltd.),<br>07 December, 1993 (07.12.93),<br>Par. Nos. [0021], [0025]; Figs. 1 to 2<br>(Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 October, 2005 (11.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| | International application No. |
|---|---|
| | PCT/JP2005/013248 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-9686 A  (Daikin Industries, Ltd.),<br>16 January, 1998 (16.01.98),<br>Par. Nos. [0038] to [0040]; Fig. 6<br>& CN 1165941 A | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003161535 A
- JP 2000161798 A
- JP 2000161799 A